(19) Europäisches Patentamt

European Patent Office

Office européen des brevets

(11) **EP 4 261 748 A1**

(12) **EUROPEAN PATENT APPLICATION**

(43) Date of publication:
**18.10.2023 Bulletin 2023/42**

(21) Application number: **23150547.0**

(22) Date of filing: **06.01.2023**

(51) International Patent Classification (IPC):
**G06N 3/063** (2023.01)   *G06N 3/04* (2023.01)

(52) Cooperative Patent Classification (CPC):
**G06N 3/063;** G06N 3/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.04.2022 IN 202221021632**

(71) Applicant: **Tata Consultancy Services Limited Maharashtra (IN)**

(72) Inventors:
• **KRISHNAN, ASHWIN**
  **400607 Thane West, Maharashtra (IN)**
• **NAMBIAR, MANOJ KARUNAKARAN**
  **400607 Thane West, Maharashtra (IN)**
• **SUMEET, NUPUR**
  **400607 Thane West, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM TO ESTIMATE PERFORMANCE OF SESSION BASED RECOMMENDATION MODEL LAYERS ON FPGA**

(57)     This disclosure relates generally to method and system to estimate performance of session based recommendation model layers on FPGA. Profiling is easy to perform on software based platforms such as a CPU and a GPU which have development frameworks and tool sets but on systems such as a FPGA, implementation risks are higher and important to model the performance prior to implementation. The disclosed method analyses a session based recommendation (SBR) model layers for performance estimation. Further, a network bandwidth is determined to process each layer of the SBR model based on dimensions. Performance of each layer of the SBR model is estimated at a predefined frequency by creating a layer profile comprising a throughput and a latency in one or more batches. Further, the method deploys an optimal layer on at least one of a heterogeneous hardware based on the estimated performance of each layer profile on the FPGA.

FIG.3

**Description**

CROSS-REFERENCE TO RELATED APPLICATIONS AND PRIORITY

The present application claims priority to Indian application no. 202221021632, filed on April 11, 2022.

TECHNICAL FIELD

The disclosure herein generally relates to performance estimation, and, more particularly, to method and system to estimate performance of session based recommendation model layers on FPGA.

BACKGROUND

Recommendation systems have become an important aspect on various online platforms such as E-commerce and video serving enterprises for identifying right products or videos for target audience. It helps customers to have better personalized experience in shopping or suggest videos of interest, respectively. Enterprises benefits by attracting potential customers. In many scenarios, user identities are anonymous, and length of the session is often short causing the conventional recommendation Models (RMs) to under-perform.

Session based recommendation (SBR) models are widely used in transactional systems to make personalized recommendations for end user. In online retail systems, recommendations based decisions are required at a very high rate specifically during peak hours. The required computational workload is very high when there are larger number of products involved. Such, SBR models incorporate learning-based products buying pattern from a user interaction sessions and recommend top-k products which the user is likely to purchase. Further, these models comprise of several functional layers that widely vary in computation and data access patterns. To support high recommendation rates, all these layers need a performance optimal implementation, which may be a challenge for diverse nature of computations. In such scenarios, existing state of the art techniques lack performance estimation of layers associated with the SBR model for selecting optimal platform between the available hardware for optimal implementation of all the layers.

SUMMARY

Embodiments of the present disclosure present technological improvements as solutions to one or more of the above-mentioned technical problems recognized by the inventors in conventional systems. For example, in one embodiment, a system for estimate performance of session based recommendation model layers on FPGA is provided. The system includes analyzing by using a model analyzer unit, a session based recommendation (SBR) model sectioned into a set of layers comprising a graph creation layer, a graph neural network (GNN) layer, a position embedding layer, an attention layer, and a scoring layer, and recording number of hidden units in each layer with a maximum session length and one or more model parameters comprising of one or more weights and one or more biases. Further, a profiling and modelling unit determines a network bandwidth required to process each layer of the SBR model based on dimensions of each layer and a corresponding batch size. Performance of each layer of the SBR model on a field programmable gated array (FPGA) is estimated at a predefined frequency by creating a layer profile comprising a throughput and a latency in one or more batches. Further, a graph creation profile estimator estimates the performance of the graph creation layer, and a graph neural network (GNN) profile estimator estimates the performance of the graph neural network (GNN) layer. Then, a position embedding layer profile estimator estimates the performance of the position embedding layer, and an attention layer profile estimator estimates the performance of the attention layer, and a scoring layer profile estimator estimates the performance of the scoring layer. The deployment optimizer deploys an optimal layer on at least one of a one or more central processing units (CPUs), a one or more graphics processing units (GPUs) and the FPGA based on the estimated performance of each layer profile on the FPGA, an execution time of each layer on the CPUs, and the GPUs, a one or more options selected by a user along with budget constraint.

In accordance with an embodiment of the present disclosure the graph creation profile estimator estimates the performance of the graph creation layer by obtaining sequentially, by a sorting module of the graph creation layer, and a set of original items in a session. Further, by a data pre-processing block removes one or more redundant elements from the set of original items to create a set of new items and retaining original position of each new item from the set of original items that are lost during a sorting process, and storing on-chip memory, wherein the original position of each new item is a set of alias inputs. Each new item an embedding of dimension (d) are fetched by using a prestored embedding table stored in a high bandwidth memory (HBM) of the FPGA. Further, adjacency matrix comprise an in-adjacency matrix and an out-adjacency matrix is created based on a predefined maximized session length and the set of alias inputs to (i) refrain dynamic memory reshaping within the FPGA, and (ii) estimate a latency of the graph creation layer, wherein the adjacency matrix is initiated with an initiation interval for a predefined clock cycle of an pipelined path with a total number of (k) inputs, and wherein the in-adjacency matrix and the out-adjacency matrix are constructed in parallel. Further, a normalized graph is created by performing normalization of the in-adjacency matrix and the out-adjacency matrix in parallel.

In accordance with an embodiment of the present disclosure the latency of the graph creation layer is estimated based on (i) a latency of the data pre-processing block, (ii) a maximum item embedding fetching latency from the HBM, and (iii) a normalized adjacency matrix, wherein the latency of the data pre-processing block and the normalized adjacency matrix depends on a number of inputs (k) to each pipelined path and a pre-defined latency.

In accordance with an embodiment of the present disclosure the latency of the GNN layer is estimated based on (i) a number of rows in first matrix (R1), (ii) a number of columns in a second matrix (C2), (iii) a number of clock cycles required to perform a first logical operation, (iv) a number of clock cycles required to perform a second logical operation at the predefined frequency on the FPGA.

In another aspect, a method for estimate performance of session based recommendation model layers on FPGA is provided. The method includes analyzing by using a model analyzer unit, a session based recommendation (SBR) model sectioned into a set of layers comprising a graph creation layer, a graph neural network (GNN) layer, a position embedding layer, an attention layer, and a scoring layer, and recording number of hidden units in each layer with a maximum session length and one or more model parameters comprising of one or more weights and one or more biases. Further, a profiling and modelling unit determines a network bandwidth required to process each layer of the SBR model based on dimensions of each layer and a corresponding batch size. Performance of each layer of the SBR model on a field programmable gated array (FPGA) is estimated at a predefined frequency by creating a layer profile comprising a throughput and a latency in one or more batches. Further, a graph creation profile estimator estimates the performance of the graph creation layer, and a graph neural network (GNN) profile estimator estimates the performance of the graph neural network (GNN) layer. Then, a position embedding layer profile estimator estimates the performance of the position embedding layer, and an attention layer profile estimator estimates the performance of the attention layer, and a scoring layer profile estimator estimates the performance of the scoring layer. The deployment optimizer deploys an optimal layer on at least one of a one or more central processing units (CPUs), a one or more graphics processing units (GPUs) and the FPGA based on the estimated performance of each layer profile on the FPGA, an execution time of each layer on the CPUs, and the GPUs, a one or more options selected by a user along with a budget constraint.

In accordance with an embodiment of the present disclosure the graph creation profile estimator estimates the performance of the graph creation layer by obtaining sequentially, by a sorting module of the graph creation layer, and a set of original items in a session. Further, by a data pre-processing block removes one or more redundant elements from the set of original items to create a set of new items and retaining original position of each new item from the set of original items that are lost during a sorting process, and storing on-chip memory, wherein the original position of each new item is a set of alias inputs. Each new item an embedding of dimension (d) are fetched by using a prestored embedding table stored in a high bandwidth memory (HBM) of the FPGA. Further, an adjacency matrix comprising an in-adjacency matrix and an out-adjacency matrix is created based on a predefined maximized session length and the set of alias inputs to (i) refrain dynamic memory reshaping within the FPGA, and (ii) estimate a latency of the graph creation layer, wherein the adjacency matrix is initiated with an initiation interval for a predefined clock cycle of an pipelined path with a total number of (k) inputs, and wherein the in-adjacency matrix and the out-adjacency matrix are constructed in parallel. Further, a normalized graph is created by performing normalization of the in-adjacency matrix and the out-adjacency matrix in parallel.

In accordance with an embodiment of the present disclosure the latency of the graph creation layer is estimated based on (i) a latency of the data pre-processing block, (ii) a maximum item embedding fetching latency from the HBM, and (iii) a normalized adjacency matrix, wherein the latency of the data pre-processing block and the normalized adjacency matrix depends on a number of inputs (k) to each pipelined path and a pre-defined latency.

In accordance with an embodiment of the present disclosure the latency of the GNN layer is estimated based on (i) a number of rows in first matrix (R1), (ii) a number of columns in a second matrix (C2), (iii) a number of clock cycles required to perform a first logical operation, (iv) a number of clock cycles required to perform a second logical operation at the predefined frequency on the FPGA.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for estimating performance of session based recommendation (SBR) model layers on a field programmable gated array (FPGA) in accordance with some embodiments of the present disclosure.

FIG.2A illustrates an example functional architecture of the system showing process of estimating performance of SBR model layers on the FPGA in accordance with some embodiments of the present disclosure.

FIG.2B illustrates an exemplary system for identifying at least one of an optimal heterogenous hardware based on estimated performance on each layer of the SBR model on the FPGA, in accordance with some embodiments of the present disclosure.

FIG. 3 illustrates a process flow diagram of a method for performance estimation of the SBR model layers on the FPGA, in accordance with some embodiments of the present disclosure.

FIG.4A illustrates an architecture of the FPGA for a graph creation layer of the SBR model for estimating performance, in accordance with some embodiments of the present disclosure.

FIG.4B illustrates a memory interface to fetch item embeddings in the graph creation layer, in accordance with some embodiments of the present disclosure.

FIG. 5A illustrates a first phase FPGA architecture of a graph neural network(GNN) layer of the SBR model for estimating performance, in accordance with some embodiments of the present disclosure.

FIG. 5B illustrates a second phase FPGA architecture of the GNN layer of the SBR model for estimating performance, in accordance with some embodiments of the present disclosure.

FIG.6 illustrates an architecture of the FPGA for a position embedding layer of the SBR model for estimating performance, in accordance with some embodiments of the present disclosure.

FIG.7A illustrates a primary phase FPGA architecture of an attention layer of the SBR model for performance estimation, in accordance with some embodiments of the present disclosure.

FIG.7B illustrates a secondary phase FPGA architecture of the attention layer of the SBR model for performance estimation, in accordance with some embodiments of the present disclosure.

FIG.8 illustrates a comparison of the SBR model layers with a state of the art techniques estimating performances of the layers, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

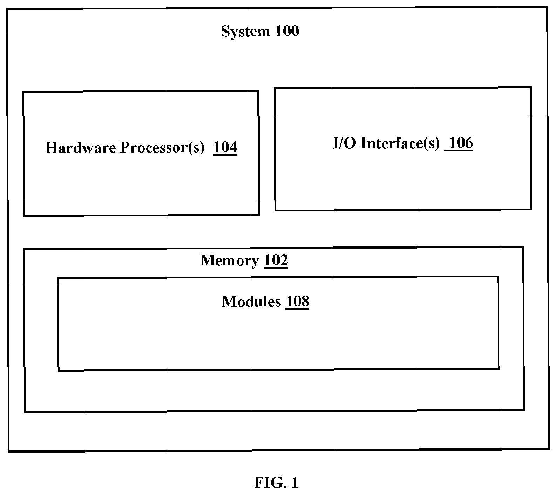

Embodiments herein provide a method and system to estimate performance of session based recommendation (SBR) model layers on FPGA. The method disclosed, enables estimating performance of layers of the SBR model to identify optimal heterogeneous between either one of a central processing units (CPUs), a graphics processing units (GPUs) and the field programmable gated array (FPGA). Layer profiling is easy to perform on software-based platforms such as the CPUs and the GPUs which have matured development frameworks and tool sets. On systems such as the FPGA, implementation risks are higher and hence, it is important to model the performance prior to implementation. Dataset from profiling and performance modeling are combined to analyze implementation decisions. The method of the present disclosure estimates performance of each layer of the SBR model on the FPGA at a predefined frequency by creating a layer profile comprising a throughput and a latency. Based on layer estimation, an optimal layer is selected between at least one of heterogeneous hardware the CPUs, the GPUs, and the FPGA, and a user selected option along with a budget constraint. Also, the system and method of the present disclosure is cost efficient, and scalable with employed performance estimation approach for optimal deployment of the hardware on the FPGA. The disclosed system is further explained with the method as described in conjunction with FIG. 1 to FIG.8 below.

**GLOSSARY:**

$k$ : Maximum possible session length.
$n$: A length of a current session represented as total number of items clicked in the current session.
$d$: Dimension of latent vectors. This defines the embedding size vector and a number of nodes in the hidden layer of a GNN and an attention.
**Throughput:** A total number of inferences per sec for the system / the number of operations/sec for individual layers.
**Latency:** A total time taken for one inference is the latency of the system or/ the time taken to process individual layers is the latency of that layer.
**Pipelined Implementation:** Executing individual layers in individual hardware for a given time where all the layers are executed concurrently.

**Pipelined Throughput:** Duration after which the next input are fed to the system which is minimum of different layer throughputs.

$log_2$ - Ceiling Function of lograthimic value is with base 2.

Referring now to the drawings, and more particularly to FIG. 1 through FIG.8, where similar reference characters denote corresponding features consistently throughout the figures, there are shown preferred embodiments and these embodiments are described in the context of the following exemplary system and/or method.

FIG. 1 illustrates an exemplary system for estimating performance of session based recommendation (SBR) model layers on a field programmable gated array (FPGA) in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

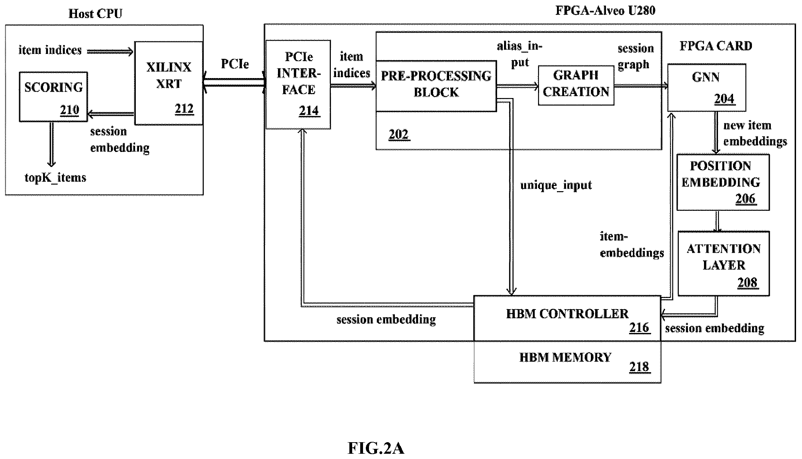

FIG.2A illustrates an example functional architecture of the system showing process of estimating performance of SBR model layers on the FPGA in accordance with some embodiments of the present disclosure. FIG.2A includes a system 100 comprising a Host CPU block and a FPGA block, wherein the FPGA block type may include a Alveo U280 hardware or any such model type and thereof. The Host CPU block includes a scoring layer 210, and a XILINX XRT 212. In this CPU block, a set of item indices are received as inputs which are transferred by the CPUs to the FPGA via a PCIe Interface to obtain one or more session embeddings which is an output of a pre-scoring block. The FPGA block includes a graph creation layer 202, a graph neural network (GNN) layer 204, a position embedding layer 206, an attention layer 208, a PCIe Interface 214, a memory controller 216 and a high bandwidth memory (HBM) 218. The Alveo U280 FPGA card is mounted on a 56 core CPU with HT and 256 GB memory for performance estimation.

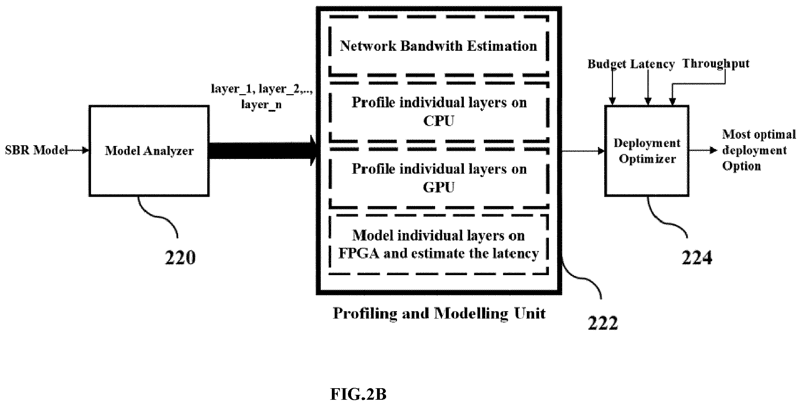

FIG.2B illustrates an exemplary system for identifying at least one of an optimal heterogenous hardware based on estimated performance on each layer of the SBR model on the FPGA, in accordance with some embodiments of the present disclosure. FIG.2B provides high level architecture of the system comprising a model analyzer unit 220, a profiling and modelling unit 222, and a deployment optimizer 226. The model analyzer unit 220 processes the session based recommendation (SBR) model. The profiling and modelling unit 222 determines the bandwidth required to process each layer on either one of a hardware. The heterogeneous hardware may include the CPUs, the GPUs, and the FPGA. Further, estimates the performance of each layer of the SBR model on the FPGA for deployment on either one of the hardware. The deployment optimizer 226 deploys an optimal layer on at least one of the hardware based on the estimated performance of each layer on the SBR model.

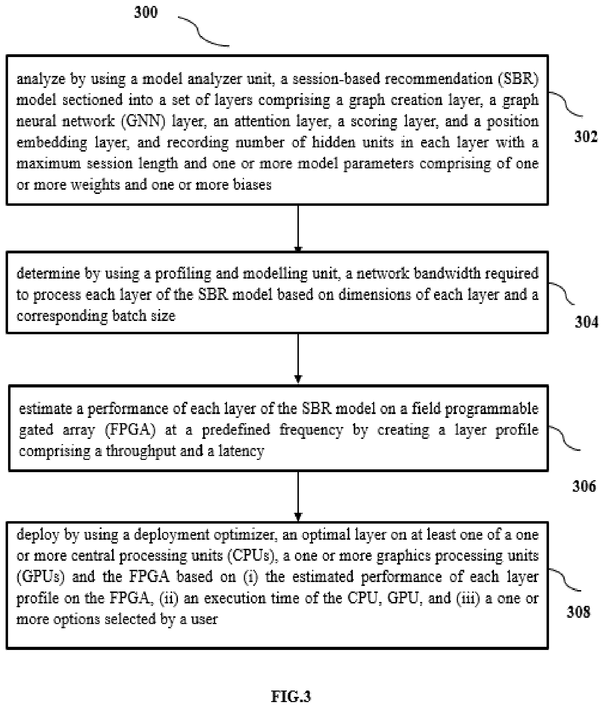

FIG. 3 illustrates a process flow diagram of a method for performance estimation and optimal deployment of SBR layers on the FPGA, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.2 through FIG.8. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring now to the steps of the method 300, at step 302, the one or more hardware processors 104 analyze by using a model analyzer unit, a session based recommendation (SBR) model sectioned into a set of layers comprising a graph creation layer 202, a graph neural network (GNN) layer 204, a position embedding layer 206, an attention layer 208, and a scoring layer 210. Further, recording a number of hidden units in each layer with a maximum session length and one or more model parameters comprising of one or more weights and one or more biases. The model analyzer unit 220 obtains the SBR model as input. However, the SBR model predicts next item (or top K items) the user is most likely to click from an anonymous session with n items by modelling complex transitions of items in the session. Considering an example, where the system 100 obtains a baseline dataset for evaluating the performance of the SBR model layers. The dataset has an average session length of 5.12 items and a total of m=43097 as a set of original items.

In one embodiment, one or more item embeddings of a recommendation model (RM) consists of an item embedding table represented as a matrix $M = [i_1, i_2, i_3, ... i_m]^T \in \mathbb{R}^{mxd}$ where each item embedding is of dimension ($d$) vector for every original item which may be alternatively referred as a product. Here, for a given set of $n$ items (or products) in a session, corresponding item embeddings are fetched ( $it\_emb \in \mathbb{R}^{nxd}$ ) from the lookup table and fed as an input to the GNN layer 204.

Referring now to the steps of the method 300, at step 304, the one or more hardware processors 104 determine by using a profiling and modelling unit, a network bandwidth required to process each layer of the SBR model based on dimensions of each layer and a corresponding batch size. The profiling and modelling unit 222 of the system 100 further determines the network bandwidth required for pipelined implementation. This is achieved by obtaining the dimensions of the output of each layer and performing logical operation with its corresponding batch size. The logical operation may include a multiplication where the layer that requires maximum bandwidth defines the overall required network bandwidth (Table 1).

Table 1 - Network Bandwidth

| Batch size | 1 | 64 | .. | 2048 |
|---|---|---|---|---|
| Network Bandwidth required | Bw_1 | Bw_64 | | Bw_2048 |

If the overall required bandwidth is more than the available network bandwidth between devices then, the overall system bandwidth would be limited by the available network bandwidth.

Referring now to the steps of the method 300, at step 306, the one or more hardware processors 104 estimate a performance of each layer of the SBR model on a field programmable gated array (FPGA) at a predefined frequency by creating a layer profile comprising a throughput and a latency in one or more batches. Further, a graph creation profile estimator estimates the performance of the graph creation layer 202 and a graph neural network (GNN) profile estimator estimates the performance of the graph neural network (GNN) layer 204.

In one embodiment, a position embedding layer profile estimator estimates the performance of the position embedding layer 206 and an attention layer profile estimator estimates the performance of the attention layer 208 and a scoring layer profile estimator estimates the performance of the scoring layer 210.

The graph creation profile estimator estimates the performance of the graph creation layer 202 which is the very first block in the SBR model where each session is converted into a graphical representation. For modelling, the graph creation layer 202 is analyzed initially where a normalized graph is obtained by modelling sequential patterns over a pair-wise adjacent items and then fed to the GNN layer 204. Here, a sorting module of the graph creation layer 202 obtains sequentially the set of original items in each session. Further, by using a data pre-processing block of the graph creation layer 202 removes one or more redundant elements from the set of original items to create a set of new items, and the original position of each new item is retaining that are lost during a sorting process and storing on-chip memory. The original position of each new item is a set of alias inputs. Each new item embedding of dimension (d) are fetched by using a prestored embedding table stored in a high bandwidth memory (HBM) of the FPGA to create an adjacency matrix. The adjacency matrix comprises of an in-adjacency matrix and an out-adjacency matrix which are estimated based on a predefined maximized session length and the set of alias inputs to (i) refrain dynamic memory reshaping within the FPGA, and (ii) estimate a latency of the graph creation layer. The adjacency matrix is initiated with an initiation interval for a predefined clock cycle of a pipelined path with a total number of (k) inputs. The predefined clock cycle represents one clock cycle. The in-adjacency matrix and the out-adjacency matrix are constructed in parallel. Then, a normalized graph is created by performing normalization on the in-adjacency matrix and the out-adjacency matrix in parallel.

The latency of the graph creation layer 202 is estimated based on (i) a latency of the data pre-processing block, (ii) a maximum item embedding fetching latency from the HBM, and (iii) a normalized adjacency matrix, wherein the latency of the data pre-processing block and the normalized adjacency matrix depends on a number of inputs (k) to each pipelined path and a pre-defined latency. The normalized adjacency matrix latency depends on the number of inputs 'k' to the path, an iteration latency which depends on the predefined latency of floating-point comparator, adder, and divider.

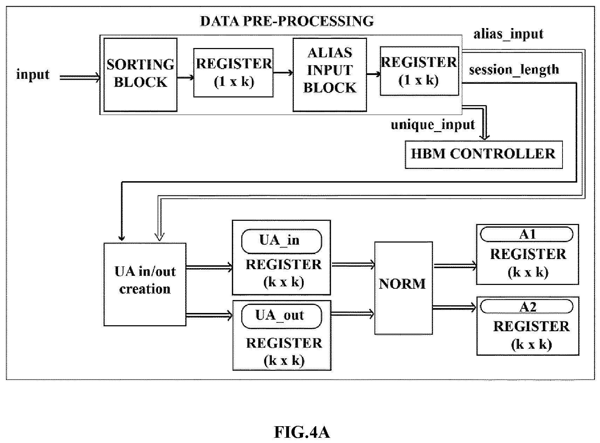

FIG.4A illustrates an architecture of the FPGA for a graph creation layer of the SBR model for estimating performance, in accordance with some embodiments of the present disclosure. Considering a session with sequence of original items ( products) with ids {10,4,6,10,1} that are processed by the graph creation layer 202. On applying the logical operation, a vector input {1,4,6,10} which is a vector of items are accessed in the obtained session. The logical operation may include a multiplication. Thus, the set of alias inputs stores the information {3,1,2,3,0} which means the 0*th* position in the set of original items session is present at the *3rd* place in the input vector. The set of alias inputs array is used in reordering the output of the GNN layer to obtain the original sequence of items in the session. The normalization operation on the in-adjacency matrix and the out-adjacency matrix is performed by summing the elements of an individual column and dividing the sum (if non-zero) by all the elements in that column. The normalized in-adjacency matrix and the out-adjacency matrix $(A1, A2 \in \mathbb{R}^{nxn})$ are generated to incorporate the graph structure which contains the information about an incoming edge and an outgoing edge of every node.

The set of original items obtained from the session is implemented by removing the repeated items in the linear time sorting network and then storing the result in the registers. The session length (*n*) is performed in parallel on sorting operation. On the FPGA, reshaping the memory dynamically is not possible and (*n*) is a variable that would vary from session to session, the variable dimensionality (*n*) is replaced with a fixed dimensionality *(k)*. This is done for every vector and matrix in the graph creation layer. Thus, the dimension of the set of alias inputs array is fixed to k. Each iterative cycle is pipelined with the initiation interval (II=1) of one clock cycle and an iteration latency of three clock cycles for three assignment operations. Here, the loop is iterated *k* times instead of *n* and the registers for the in-adjacency matrix and the out-adjacency matrix are fixed to dimension *(k x k)*. To avoid additional information being captured in the graph from padded zeros for shorter sessions, an 'if condition in the iterative cycle specifies that the in-adjacency matrix and the out-adj acency matrix will be set only for iterations less than *n* and ignores for other iterations. Here, the loop iterates till (k), but the information is captured in the graph for only *n* iterations. Further, both the in-adjacency matrix and the out-adjacency matrix are created in parallel.

For *k* = 10, *the total latency* = 10 (alias input creation) + 3 (iteration latency) =13 clock cycles. Now, for any pipelined path with '*inps*' inputs, II=$t_1$, and an iteration latency of $t_2$, will have an overall latency described in equation 1.

$$Latency = t_2 + t_1 * (inps - 1) \ clock \ cycles \ \text{-----} \ \text{equation 1}$$

The floating point operation such as addition takes 4 clock cycles and division takes 5 clock cycles, respectively at 200MHz. So, to add ten numbers while performing normalization operation on the in-adjacency matrix and the out-adjacency matrix represented as equation 2,

$$4 * log_2 10 = 4 * 4 \ clock \ cycles \ \text{---------} \ \text{equation 2}$$

Thus, normalization operation on an individual column pipelined with II=1 ($t_1$ =1) has an iteration latency ($t_2$) of 4*4 + 5 = 21 clock cycles. Hence, to perform this operation on ten different columns (*inps* = 10), the latency is 21 + (10-1) =30. Again, both the normalization operation is modelled in parallel. Unlike the CPUs and the GPUs implementation where item embedding lookup operation is a part of the GNN layer 204. Here, the set of new item array is sent to the high bandwidth memory (HBM) controller to fetch the item embeddings immediately after its creation. Here, the embedding lookup table executes immediately after the data pre-processing block. This happens in parallel to the iterative cycle and normalization operations. Further, another 50 clock cycles are added as safe margin to implement various control logic, load and store operations and the total estimated latency is represented in equation 3,

Total estimated latency = pre-processing block latency + max (embedding lookup latency --------

equation 3

Which is represented with an example as (13+30)) + 50 = 20 + max (74, 43) + 50 = 144 clock cycles with a throughput of 1.4x106 operations at 200 MHz

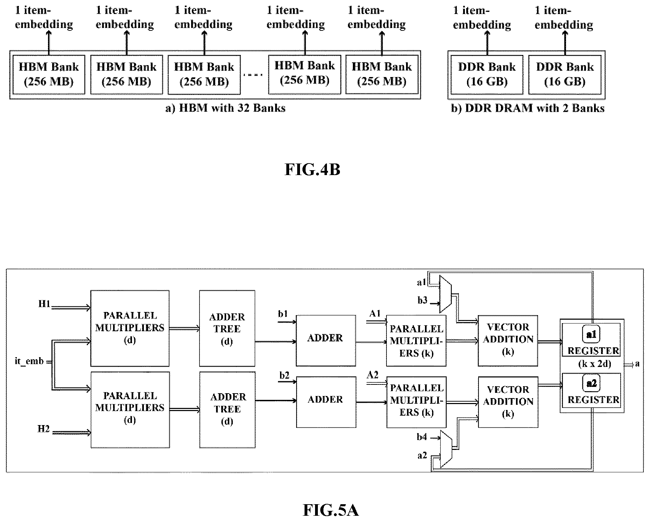

FIG.4B illustrates a memory interface for item embeddings of the graph creation layer, in accordance with some embodiments of the present disclosure. In the SBR model, n-item embeddings with each embedding $\in \mathbb{R}^d$ needs to be fetched for a session with n items. Here, parallelization can be leveraged for faster embedding access. The availability of 32 parallel HBM banks and 2 DDR DRAM banks controller could fetch 64 Bytes of data per bank in one clock cycle whereas one HBM bank could fetch only 32 Bytes per bank. Thus, for d = 100 (400 Bytes), a burst length of 7 and 13 would be required on the DDR and the HBM, respectively and the worst-case latency to fetch an item embedding (400 Bytes) on DDR would be around 38 clock cycles whereas it would be around 74 clock cycles on HBM. In other words, at most ten item embeddings need to be fetched for a single inference. Implementing ten embedding fetch operation using the two DDR banks, it would require five roundtrips from each bank with a total worst-case latency of 190 clock cycles. It takes one roundtrip to fetch ten item embeddings from ten different HBM banks, with an overall worst-case latency of 74 clock cycles. The HBM interface always fetch the data in the multiple of 256 bits (32 Bytes), but the size of an individual item embedding is 400 Bytes which is not a multiple of 32. So, append zeros at the end to make it 416 Bytes. The embeddings of the last 16 Bytes are ignored. The embeddings are arranged in exact order of items indices. In other words, for the 1st item, the corresponding embeddings occupy 1st 416 Bytes of space. Then for the 2nd item, its corresponding embeddings occupy next 416 Bytes of space, and so on. To fetch the embedding for the item with index 'i', we provide the address $BA + (416 * i)$ where BA is the base address of the HBM bank that is known in prior.

The graph neural network (GNN) profile estimator estimates the performance of the graph neural network (GNN) layer 204. The GNN layer 204 processes the normalized graph and an embedding of each new item obtained from the graph creation layer 202.

The GNN layer 204 comprises of a first phase and a second phase. The first phase of the GNN layer 204 comprises of (i) a first set of parallel multipliers with dimension ($d$), (ii) a set of adder trees with dimension ($d'$), (iii) a set of adders, (iv) a set of parallel multipliers with dimension ($k$), (v) a set of vector additions ($d$), and (vi) a set of registers ($kxd$) forming a large register ($kx2d$).

The second phase of the GNN layer 204 comprises of a ($i$) second set of parallel multipliers with dimension ($2d$) and the set of parallel multipliers with dimension ($d$), (ii) a set of adder trees with dimension ($2d$), and the adder tree with dimension ($d$), (iii) a set of adders, (iv) a tanh, (v) a subtractor, (vi) a set of sigmoids, (vii) a set of multipliers, and (viii) a set of registers ($kxd$).

Further, a graph matrix is determined by concatenating a first graph parameter and a second graph parameter, wherein the first graph parameter and the second graph parameter are computed based on (i) the normalized adjacency matrix, (ii) the embedding of each new item, (iii) weights and (iv) biases.

The latency of the GNN layer 204 is estimated based on the graph matrix, the normalized graph from the graph creation layer 202 and an embedding of each new item by using the first phase of the GNN layer 204 and the second phase of the GNN layer 204.

Referring the above example, all the model parameters are stored in the BRAMs to have low access latency. The matrix multiplication such as ($A_{R1xc1} * B_{R1xc1}$) is implemented using three loops. The outermost loop iterates R1 times, a middle loop C2 times and an inner most loop iterates C1 times. For every matrix multiplication, the innermost loop is completely unrolled leaving only two loops (outer and center loops) and at hardware level, it can be visualized as C1-parallel multipliers followed by an adder tree unit. The total number of inputs (*inps*) is equal to the R1*C2. The iteration latency of adder tree unit $log_2 R1$ with II=1. The adder tree performs summation of the elements of the vector.

FIG. 5A illustrates a first phase FPGA architecture of a graph neural network(GNN) layer of the SBR model for estimating performance, in accordance with some embodiments of the present disclosure. The dimensionality ($k$) is used instead of ($n$) for similar reason stated previously in the graph creation layer. Thus, the total number of inputs (*inps*) to the block is equal to ($d * k$) and the data path is implemented in parallel. Now, the entire row of the *it_emb matrix* is multiplied with corresponding elements in the column of the H1/H2 and a sum of products (SOP) is achieved with an adder tree unit. To access all the elements of column of H1/H2 in parallel, ($d$) partitions of BRAMs are created and each row resides in an individual partition. The output is then added with a bias ($b1$, $b2$). This takes around $log_2 d + 2$ (one for multiplication and one for bias-addition) clock cycles. Then, the set of k-parallel multipliers and a vector addition unit incorporating 2 more clock cycles are used where an entire column of A1/A2 is multiplied with the same output, coming from the adder. For every 1st iteration of the outer loop, the inputs to the vector addition unit is $b3_j b4$. For the later iterations of the outer loop, $ith\ column \in \mathbb{R}^d$ of 'a1' and 'a2' is fed back to the vector addition unit to achieve the SOP. Here, $i$ is the *ith* iteration of the center loop. It is to be noted that with two loops, the data path is pipelined with an II=1 ($t_1$=1). If the latency of 4 clock cycles are included for FP32 addition / multiplication at 200MHz, the overall iteration latency ($t_2$) would be equal to $4 * (log_2 d + 4)$ clock cycles and the total latency of the block is represented in equation 4,

$$\text{Total latency with } (d * k) \text{ inputs} = (d * k) + 4 * (log_2 d + 4) \text{ clock cycles ------- equation 4}$$

After adding 50 clock cycles as a safe margin, for $d$ = 100 *and* $k$ = 10 the overall estimated latency of the block is 1094 clock cycles.

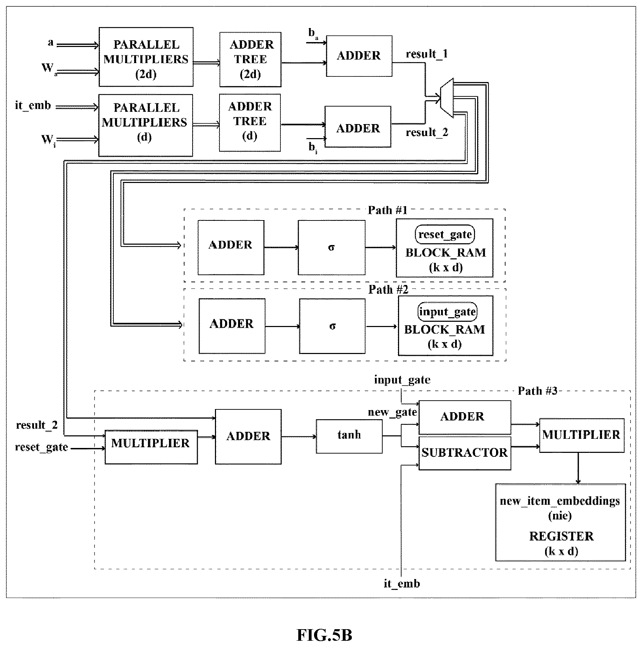

FIG. 5B illustrates a second phase FPGA architecture of the GNN layer of the SBR model for estimating performance, in accordance with some embodiments of the present disclosure. The inputs for the second phase are the outputs of the first phase of the GNN layer which is represented as $a \in \mathbb{R}^{kx2d}, W_a \in \mathbb{R}^{2dx3d}, it\_emb \in \mathbb{R}^{kxd}$ and $W_i \in \mathbb{R}^{dx3d}$. There are three paths (marked as path #1, path #2, and path #3 to implement the pipelined II=1 (t1=1). Inputs to all these paths arrive from the set of 2d-parallel multipliers with an adder tree unit followed by an adder giving an overall latency of $4 * (log_2 2d + 1 + 1)$ clock cycles. Each of the $k$ outer loop iterations will have a total of $3 * d$ center loop iterations with d iteration for an individual path. The paths 1,2, and 3 are executed sequentially. Thus, total inputs (*inps*) to the block is $3 * k * d$. Now, the latency of the set of sigmoid (σ) and the tanh blocks are 12 clock cycles. The iteration latency for the path #1 and the path #2 is 12+(4* 1) = 16 clock cycles each. For path #3, the latency is 4*4 + 12 = 28 clock cycles. 4*4 is used for four adders/multipliers in sequence and 12 for the tanh block. Therefore,

$$t_2 = (4 * (log_2 2d + 2) + 16 + 16 + 28) \text{ ------- equation 5}$$

$$\text{The overall latency of the block} = (3 * d * k + 4log_2 2d + 68) + 50 \text{ clock cycles ----}$$

$$\text{equation 6}$$

For d = 100, the estimated latency is 3150 clock cycles and a safe margin of about 50 clock cycles. For the entire GNN layer 204 operation, the overall latency is (1094+3150) clock cycles, but in the pipelined implementation, the overall throughput is limited by the block with highest latency. Here, it is 3150 clock cycles and therefore the throughput at 200MHz is 63492 operations.

The position embedding layer profile estimator estimates the performance of the position embedding layer 206. This layer processes the set of alias inputs fetched from the graph creation layer 202 to a memory controller and the output of the GNN layer 204. At every iteration in the loop, a position embedding vector is fetched from a position embedding table stored in a block RAM.

The latency of the position embedding layer 206 is estimated by using a total number of ($k$) iterations, and a latency of the vector addition at the predefined frequency of the FPGA, wherein the vector addition fetches input from the position embedding vector and the output obtained from the GNN layer 204.

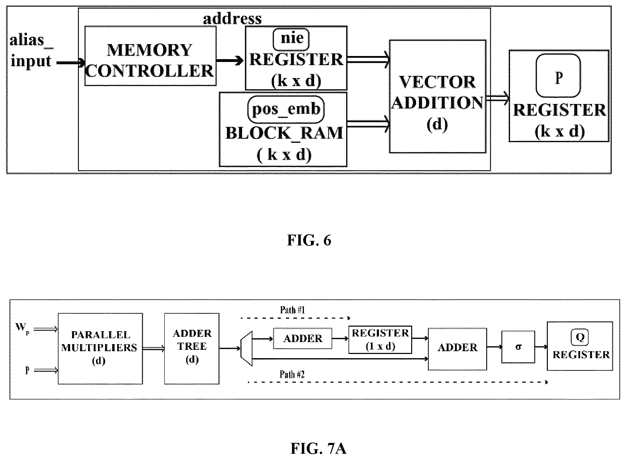

FIG.6 illustrates an architecture of the FPGA for a position embedding layer of the SBR model for estimating performance, in accordance with some embodiments of the present disclosure. The architecture for the position embedding layer 206 is $pos\_emb \in \mathbb{R}^{kxd}$ is stored in the BRAM with d partitions and the iterative cycle iterates ($k$) times pipelined with II=1. The lookup table is performed by passing the position index to the *pos_emb* table similar to passing the item index to fetch item embeddings. For every iteration in the loop, embedding vector $\in \mathbb{R}^d$ is fetched from the *pos_emb.*

Here, the '*i*' is a loop iteration variable in the iterative cycle which is treated as the position index. Since the set of alias inputs $\in \mathbb{R}^k$, the number of inputs to this block is $k$. Total iteration latency is equal to the latency of FP32 addition operation of 4 clock cycles. Thus, total estimated latency is ($k$ + 4) + 10 which is equal to 24 clock cycles for $k$ = 10 which is added with 10 clock cycles as safe margin due to lower number of operations involved within the position embedding block.

The attention layer profile estimator estimates the performance of the attention layer 208. The attention layer processes the output obtained from the position embedding layer 204 ($p$) with one or more weights, wherein the attention layer comprises of a primary phase and a secondary phase.

The primary phase of the attention layer 208 comprises of (i) a first set of parallel multipliers with dimension ($d$), (ii) an adder tree with dimension ($d$), (iii) a sigmoid, (iv) an adder with two paths, and (v) a register.

The secondary phase of the attention layer 208 comprises of (i) a second set of parallel multipliers with dimension

($2d$) and the set of parallel multipliers with dimension ($d$), (ii) an adder tree with dimension ($2d$) and the adder tree with dimension ($d$), (iii) an adder, (iv) a normalizer, and (v) a set of registers.

The latency of the attention layer 208 is estimated based on latency paths with its corresponding safe margin latency by using the primary phase of the attention layer and the secondary phase of the attention layer.

FIG.7A illustrates a primary phase FPGA architecture of an attention layer of the SBR model for performance estimation, in accordance with some embodiments of the present disclosure. All the individual paths are marked with dashed lines are pipelined with II=1. In $W_p = [W_1, W_2]^T \in \mathbb{R}^{dx2d}$. Similarly, the GNN layer 204 observes the latency of path #1 with d inputs and path #2 with $k * d$ inputs in d + 4 and $k * d$ + 16 *clock cycles,* respectively. Hence, the overall estimated latency for is

$$(k * d \, + \, d) + 4 * (log_2 d + 1) \, + \, (16 + 4) \, + \, 50 \, = \, 1202 \; clock \; cycles \; \text{----------- equation 7}$$

FIG.7B illustrates a secondary phase FPGA architecture of the attention layer of the SBR model for performance estimation, in accordance with some embodiments of the present disclosure. The item embeddings $\alpha\_temp \, \in \, \mathbb{R}^{kxd}$ and the division takes 5 clock cycles. The overall estimated latency is represented as equation 8,

$$Estimated \; latency = latency \; of \; path \; \#1 \; (inps = k) \, +$$

$$latency \; of \; path \; \#2 \; (inps = d) + latency \; of \; path \; \#3 \; (inps = d) \, +$$

$$latency \; of \; path \; \#1 \; (inps = d) + safe \; margin \; latency = (k + 4 + 4log_2 d + 4) \, +$$

$$(d + 4log_2 k) + (d + 4 + 4log_2 2d + 4) + (d + 4 + 4log_2 2d + 5) + 50 =$$

$$489 \; clock \; cycles \; \text{------------ equation 8}$$

Overall latency of the attention layer 208 is 1202+489 = 1691 clock cycles and throughput is 166.4x103 operations/s at 200MHz.

The scoring layer profile estimator estimates the performance of the scoring layer 210. Here, a set of item embeddings, and an output of the attention layer 208 is obtained for estimating, the latency of the scoring layer 210 based on an iteration latency and the set of item embeddings. The iteration latency is computed based on one or more parallel adders with dimension ($d$) with the adder tree having dimension ($d$). The scoring layer is implemented with an example dataset of the Diginetica (state-of-the-art) having 43097 original items which involves the matrix multiplication of the $sess\_emb \, \in \, \mathbb{R}^{1xd}$ with the entire set of item embeddings $\in \, \mathbb{R}^{dx43097}$. Here, the total number of inputs is 43097.

The iteration latency for the set of d-parallel adders with the set of adder tree is 4 * ($log_2 d$ + 1). Thus, the total estimated latency with d=100 is 43,129 clock cycles with a throughput of 4637 operations/s. This gives 43097 distinct scores, out of which top-K scores need to be picked using a sorting or a top-K network. For $K$ = 20 feedback the top 20 scores from each of the 128 sorted scores. Hence, effectively 108 scores could be passed through the sorting network giving a total of 43097/108=400 such iterations. For, the first iteration dummy zeros could be treated as the feedback. Hence, to sort 43097 scores, it would take around 400*28 = 11200 clock cycles with 28 clock cycles to sort one set of 128 scores.

The overall latency to implement scoring block is 43,129+11200+50 (safe margin) = 54379 clock cycles. As stated earlier, the throughput of the scoring block is limited by the subblock with maximum latency. Here, it is 4637 operations. Table 2 summarizes the modelling to estimate the latency and the throughput.

Table 2 - Estimated performance of layers

| Layer | Estimated Latency (clock cycles) | Estimated Throughput (@200MHz) |
|---|---|---|
| Graph creation layer | 144 | $1.4x10^6$ |
| GNN layer (first phase) | 1094 | 63492 |
| GNN layer (second phase) | 3150 | |
| Position Embedding layer | 24 | $8.3x10^6$ |
| Attention layer (primary phase) | 1202 | $166.4x10^3$ |
| Attention layer (primary phase) | 489 | |
| Scoring layer | 54379 | 4637 |

It is to be noted that the estimated resource consumption is less than 70% of the total available resource on the FPGA when SBR model layers performance estimation is processed. This avoids reduction in the operating frequency due to routing constrains. Estimated resource consumption is based on a pre-defined floating point multiplication and floating-point addition/subtraction processed with each two digital signal processing. The comparison operation consume 28 lookup tables (LUTs) at 200MHz.

If the resource consumption exceeds 70% of the total available resource, then re-use the multipliers and the adder tree within a layer. For example, a phase 2 of the GNN layer shares the same set of parallel multipliers, the set of adder trees and the set of adders that can be used for path #1, path#2 and path#3.

Referring now to the steps of the method 300, at step 308, the one or more hardware processors 104 deploy by using a deployment optimizer an optimal layer on at least one of a one or more central processing units (CPUs), a one or more graphics processing units (GPUs) and the FPGA based on (i) the estimated performance of each layer profile on the FPGA, (ii) an execution time of each layer on the CPUs, and the GPUs, and (iii) a one or more options selected by a user. The first option selected by the user for deployment of the optimal layer is determined based on a throughput selected by the user to identify an optimal hardware between the CPUs, the GPUs, and the FPGA.

The second option selected by the user for deployment of the optimal layer is determined based on the latency of each layer matched with a service level agreement in real time interference, where the latency of the CPUs and the GPUs are obtained by inversing the throughput, and the latency of the FPGA is obtained by performing logical operation on the estimated latency of each layer in clock cycles with a time period. The logical operation is inverse of the latency.

The third option selected by the user for deployment of the optimal layer is determined based on the budget constraint with high throughput, and identifying one or more hops between the CPUs, the GPUs, and the FPGA.

The fourth option selected by the user for deployment of the optimal layer is determined based on the budget constraint with low latency, and identifying one or more hops between the CPUs, the GPUs, and the FPGA.

In one embodiment, it is observed that the CPUs and the GPUs performance changes by varying the batch size, the results of which are displayed in Table 3,

Table 3 - CPU and GPU performance in terms of operations on various batch

| CPU | | | | |
|---|---|---|---|---|
| Layer | B=1 | B=512 | B=1024 | B=2048 |
| Graph creation layer | 2202 | 7448 | 7137 | 7635 |
| GNN layer | 1225 | 22790 | 45580 | 64194 |
| Position Embedding layer | 5263 | 23813 | 47627 | 57496 |
| Attention layer | 1605 | 62271 | 124500 | 294500 |
| Scoring layer | 4405 | 16623 | 33247 | 33240 |
| Pipelined Throughput | 1225 | 7448 | 7134 | 7635 |
| GPU | | | | |
| Layer | B=1 | B=512 | B=1024 | B=2048 |
| Graph creation layer | 279 | 402 | 401 | 404 |
| GNN layer | 1300.3 | $533.8x10^3$ | $1.1x10^6$ | $2.1x10^6$ |

(continued)

| GPU | | | | |
|---|---|---|---|---|
| Layer | B=1 | B=512 | B=1024 | B=2048 |
| Position Embedding layer | 4048.5 | 38330.8 | 41373.7 | 41558 |
| Attention layer | 1472.8 | $682.6x10^3$ | $1.4x10^6$ | $2.7x10^6$ |
| Scoring layer | 5434.8 | $2.5x10^6$ | $5.6x10^6$ | $10.7x10^6$ |
| Pipelined Throughput | 279 | 402 | 401 | 404 |

The values in the Table 3 represents the throughput for each operation (batch size/latency). The overall throughput with layer-wise pipeline will be equal to that of the layer with minimum throughput. Some observations from the Table 3,

1. There is an increase in overall throughput with increase in batch size in both the CPU and the GPU implementations.
2. It is observed that the throughput of a single inference (batch size=1) impacts the GPU performance as compared to the CPU.
3. Apart from the graph creation layer 202, all the layers represents very high speed compared to the CPU when the batch size is increased from 1 to 512.
4. The graph creation layer 202 and the position embedding layer 206 run faster on the CPU compared to the GPU, where the other layers run faster on the GPU.
5. The graph creation layer 202 is the slowest running layer for both the CPUs and the GPUs platforms.

On server with the GPUs, it will be better to deploy the graph creation layer 202 on the CPU while the remaining layers are best deployed on the GPUs. It may be noted that deploying the position embedding layer 206 on the CPU gives the higher throughput. However, the graph creation layer 202 deployed in the CPU would limit the overall throughput. This configuration of the graph creation layer 202 on the CPU and other layers on the GPU are experimentally evaluated which yielded an overall throughput of about 6795 inferences per second for a batch size of about 2048. The presented implementation is not layer-wise pipelined and as a result, the overall throughput is less than 7635 (pipelined throughput) inferences per second as referred in (option 4-Table 4).

Table 4 - Deployment consideration (B=2048)

| Layer | Option 1 | Option 2 | Option 3 | Option 4 |
|---|---|---|---|---|
| Graph creation layer | FPGA | FPGA | FPGA | CPU |
| GNN layer | GPU | FPGA | FPGA | GPU |
| Position Embedding layer | FPGA | FPGA | FPGA | GPU |
| Attention layer | GPU | GPU | FPGA | GPU |
| Scoring layer and sorting | GPU | GPU | CPU | GPU |
| Maximum Throughput (ops/s) | $1.4x10^6$ | 63492 | 33240 | 7635 |
| lower bound on latency LLM (ms) | 3.885204 | 46.1288 | 124.1072 | 273.5326 |
| network bandwidth requirement NBR(MB/s) | 8.19 | 8.19 | 0.819 | 1.64 |

For a given batch size (B) and throughput ($x_i$) for the layer $i$, estimating the non-pipelined throughput $X_{np}$ with total number layers ($n_l$)as represented in equation 3,

$$X_{np} = [\sum_{i=1}^{n_l}[x_i]^{-1}]^{-1} \text{------------equation 3}$$

With the implementation of a two-stage pipeline such as,

1) one process implementing the graph creation layer 202 on the CPU, and
2) another process running the GPU implementation of remaining layers obtains the throughput which is equal to the throughput of the graph creation layer 202 (7635 inferences per second).

It is assumed there is only one instance of each layer, and all the layers are connected in a pipeline, the maximum achievable throughput (Max Thr) is reported to be that of the slowest. The lower bound on latency (LLB) is calculated as the sum of the inverse of the measured CPUs, the GPUs (Table 3) and the modeled FPGA (Table 2) throughputs for the batch size of 2048. The last row of the table is the maximum interconnection network bandwidth required (NBR) to support the expected throughput.

This is calculated by analyzing the size of the required data to be passed across the successive layers not deployed on the same hardware and the end-to-end pipelined throughput to be supported. In the best ranked option, we could have each of the layers deployed to the hardware platform in which it is expected perform the best as seen from the profiling and modeling results. However, in this configuration we see many hops in the pipeline between the FPGA and the GPU. This could be a potential problem with the network interconnecting the FPGA and the GPU. There are two scenarios,

> 1. FPGA and the GPU present in the same server connected over the PCIe v3 network (15 GB/s bandwidth in one direction).
> 2. FPGA and the GPU installed in different host servers connect over 10 Gbps Ethernet network.

In both the above cases, the analyzed data transfer requirements determines maximum network bandwidth requirement which is much lesser than 10 Gbps. As a result, both the cases (PCIe or Ethernet), the network bandwidth will not limit the overall predicted inferencing rate and the cost of implementing is very high. However, the deployment with second option, latency can be of concern and need to be evaluated against permissible latency per inference limits.

In one embodiment, describing experimental evaluation results for performance estimation of the SBR model layers, where the Alveo U280 is an example FPGA card which is mounted on a 56 core CPU with HT and 256 GB memory (FIG.2A). It is to be noted that Vitis accelerated flow (state-of-the-art) provides all necessary drivers (Xilinx XRT) to establish communication with the FPGA card. The Host CPU code is written in C++ with the support of OpenCL libraries to communicate with the hardware kernels present on the FPGA device. The data pre-processing block (FIG.4A) is implemented using a Verilog HDL in Xilinx Vivado and the pre-scoring blocks are implemented using the Xilinx Vitis High Level Synthesis version 2019.2. The HLS code is converted into an IP invoked in the Vivado to create the hardware kernel. The maximum achievable operating frequency was observed as 173.5 MHz instead of 200MHz due to routing constraints. Table 5 summarizes the synthesis report from the HLS compiler.

Table 5- Achieved performance of layers on the FPGA

| Layer | Latency (clock cycles) | Latency (in micro sec) | Achieved Throughput |
|---|---|---|---|
| Graph creation layer | 176 | 1.01 | $990x10^3$ |
| GNN layer (second phase) | 3133 | 18.05 | 55401 |
| Position Embedding layer | 15 | 0.086 | $11.6x10^6$ |
| Attention layer (primary phase) | 1185 | 6.83 | 146413 |
| Attention layer (secondary phase) | 487 | 5.11 | |
| Overall | 6105 | 35.18 | 28419 |

It is observed that the latency in terms of clock cycles matches closely with the disclosed method. Slight variation in number of clock cycles in Table 2 and Table 5 is due to the change in actual frequency of operation slight mismatches with the assumed safe margin. The pre-scoring block consumes an overall of 42% LUTs, 41% DSPs, 24% registers, and 37% of total BRAMs available on the Alveo U280.

The profiling embedding lookup performance on the HBM describes the modelling of entire set of the item embeddings for the Diginetica dataset (17.9MB after padding zeros) replicated across 10 HBM banks. Each HBM bank is connected to a Memory-Mapped AXI interface. The item embeddings are transferred to the HBM memory directly by calling the OpenCL function for each of the ten memory banks without running the kernel. The total number of clock cycles required to perform embedding lookup operation is calculated by reading the value of the counter placed in the FPGA kernel. The counter is enabled once the read embedding signal is triggered and stopped after receiving the last byte. It is identified that on an average it takes 69 clock cycles to perform ten embedding fetch operations in parallel close to what we predicted from modelling.

The end-to-end inference on FPGA-CPU (F-C) hybrid (FIG.2A) the item indices are the inputs that are transferred from the CPU to the FPGA via the PCIe to give the session embedding that is the output of the pre-scoring block. The scoring block (Table 4) implemented on the CPU. The Intel MKL library implements the matrix-multiplication and GNU's GSL (state-of-the-art libraries) library to perform the top-K operation on the CPU.

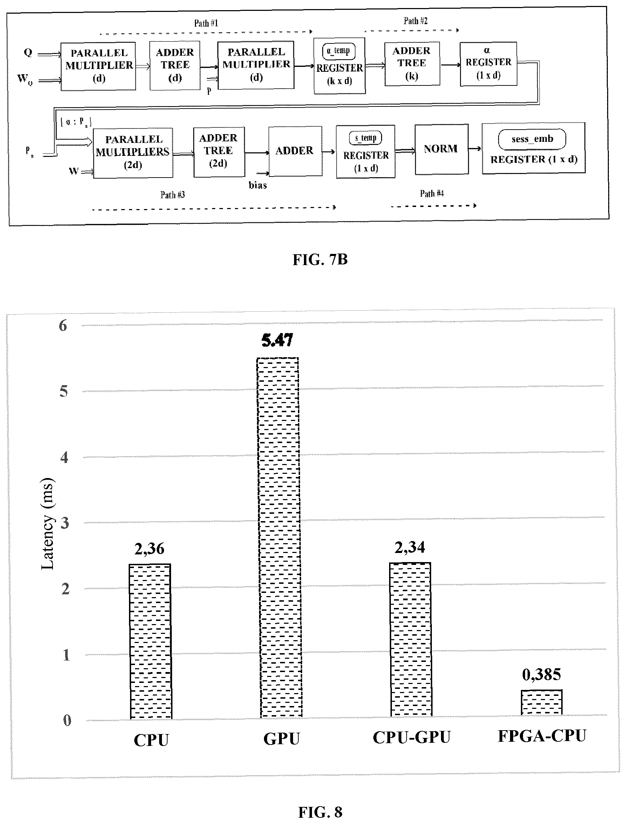

The Vitis hardware development platform does not yet support direct streaming from the host server to the Xilinx U280 FPGA due to which the kernel needs to be launched (instead of simply transferring the inputs to an always running kernel) for every session arrival adding a penalty of almost $120\mu$s. Here, for every real-time inference, the kernel is launched using the OpenCL function. The items indices for the session are sent as unidirectional scalar inputs to the device. Also, to retrieve the session embedding back from the device, the embeddings are first stored in the global memory (HBM) and then transferred to the host CPU. Both these OpenCL functions together have an average overhead latency of $120\mu$s limiting the throughput of FPGA to 8333 operations. The overall F-C implementation for a real-time inference of batch size=1 has a latency of $385\mu$s (throughput=2597inferences/s) with a speed up (latency) of 6.1x compared to baseline CPU, 14.2x compared to baseline GPU without any loss in accuracy. This is summarized in FIG. 8

FIG.8 illustrates a comparison of the SBR model layers with a state of the art techniques estimating performances of the layers, in accordance with some embodiments of the present disclosure. To implement the batch inference, the entire batch (B) of sessions is transferred at one go to the HBM bank. At the FPGA end, one session would be retrieved, processed and then the next session would be retrieved. The outputs of all these sessions are stored in an HBM bank. Then at one go, all the session embeddings are transferred back to the CPU. The overall throughput observed to compute the session embeddings of a batch of 2048 sessions on FPGA is 55401 inferences/s. Table 5 which is equal to the throughput of the GNN layer which has the lowest throughput in comparison to the others.. By batching the inputs and to hide the overhead latency of $120\mu$s in calling the OpenCL functions and improve the throughput from 8333 to 55401 inferences/s.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of performance estimation and deployment. The embodiment, thus provides method and system to estimate performance of session based recommendation model layers on FPGA. Moreover, the embodiments herein further provides an efficient and scalable for performance estimation of the SBR model layers for optimal deployment on the heterogeneous hardware. Performance modeling and profile-based design approach to arrive at an optimal implementation, comprising of the hybrid network such as the CPUs, the GPUs, and the FPGA for the SBR model. Deploying the layers on the CPUs, the GPUs, and the FPGA, realizes 6.1x reduction in the latency as compared to the CPU-GPU deployment combination which was initially evaluated. The disclosed method of the FPGA with HBM memories achieves low latencies and high throughput.

The GPU implementation of the scoring layer delivers highest throughput compared to the measured value on the CPUs and estimated with the modelling on the FPGA. This makes the GPU to be the preferred platform to run the scoring layer 210. The CPU component of the computation is growing in the PyTorch implementation of GNN layer 204 with increase in the batch size. Also, there is an increase in the overall throughput of the GNN layer 204 with the batch size. This can be attributed to the increase in computational efficiency of the CPU component in the GNN layer 204, which gains performance from the larger batch size. Based on the profiling and modelling unit 222, the best way to deploy various layers on different hardware blocks for maximum throughput as shown in Table 4. The Table 4 presents the deployment options in columns ranked in descending order of achievable throughput.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) to estimate performance of session based recommendation (SBR) model layers on FPGA, comprising:

   analyzing (302), via one or more hardware processors, a session based recommendation (SBR) model sectioned into a set of layers comprising a graph creation layer, a graph neural network (GNN) layer, a position embedding layer, an attention layer, and a scoring layer, and recording number of hidden units in each layer with a maximum session length and one or more model parameters comprising of one or more weights and one or more biases;
   determining (304), via the one or more hardware processors, a network bandwidth required to process each layer of the SBR model based on dimensions of each layer and a corresponding batch size;
   estimating (306) via the one or more hardware processors, a performance of each layer of the SBR model on a field programmable gated array (FPGA) at a predefined frequency by creating a layer profile comprising a throughput and a latency in one or more batches,

      wherein, a graph creation profile estimator estimates the performance of the graph creation layer,
      wherein, a graph neural network (GNN) profile estimator estimates the performance of the graph neural network (GNN) layer,
      wherein, a position embedding layer profile estimator estimates the performance of the position embedding layer,
      wherein, an attention layer profile estimator estimates the performance of the attention layer, and
      wherein, a scoring layer profile estimator estimates the performance of the scoring layer; and

   deploying (308), via the one or more hardware processors, an optimal layer on at least one of a one or more central processing units (CPUs), a one or more graphics processing units (GPUs) and the FPGA based on (i) the estimated performance of each layer profile on the FPGA, (ii) an execution time of each layer on the CPUs, and the GPUs, and (iii) a one or more options selected by a user.

2. The processor implemented method (300) as claimed in claim 1, wherein the graph creation profile estimator estimates the performance of the graph creation layer by performing the steps of:

   obtaining sequentially by a sorting module of the graph creation layer, and a set of original items in a session;
   removing by a data pre-processing block one or more redundant elements from the set of original items to create a set of new items, and retaining original position of each new item from the set of original items that are lost during a sorting process, and storing on-chip memory, wherein the original position of each new item is a set of alias inputs;

fetching for each new item an embedding of dimension (d) by using a prestored embedding table stored in a high bandwidth memory (HBM) of the FPGA;

creating an adjacency matrix comprising an in-adjacency matrix and an out-adjacency matrix based on a pre-defined maximized session length and the set of alias inputs to (i) refrain dynamic memory reshaping within the FPGA, and (ii) estimate a latency of the graph creation layer, wherein the adjacency matrix is initiated with an initiation interval for a predefined clock cycle of a pipelined path with a total number of (k) inputs, and

wherein the in-adjacency matrix and the out-adjacency matrix are constructed in parallel,
wherein the latency of the graph creation layer is estimated based on (i) a latency of the data pre-processing block, (ii) a maximum item embedding fetching latency from the HBM, and (iii) a normalized adjacency matrix, wherein the latency of the data pre-processing block and the normalized adjacency matrix depends on a number of inputs (k) to each pipelined path and a pre-defined latency; and

creating a normalized graph by performing normalization of the in-adjacency matrix and the out-adjacency matrix in parallel.

3. The processor implemented method (300) of claim 1, wherein the graph neural network profile estimator estimates the performance of the graph neural network (GNN) layer by performing the steps of:

processing by the GNN layer, the normalized graph and an embedding of each new item obtained from the graph creation layer, wherein the GNN layer comprises of a first phase and a second phase,

wherein, the first phase comprises of (i) a first set of parallel multipliers with dimension ($d$), (ii) a set of adder trees with dimension ($d'$), (iii) a set of adders, (iv) a set of parallel multipliers with dimension ($k$), ($v$) a set of vector additions ($d$), and (vi) a set of registers ($kxd$) forming a large register ($kx2d$),
wherein, the second phase comprises of a (i) second set of parallel multipliers with dimension ($2d$) and the set of parallel multipliers with dimension ($d$), (ii) a set of adder trees with dimension ($2d$), and the adder tree with dimension ($d$), (iii) a set of adders, (iv) a tan, (v) a subtractor, (vi) a set of sigmoids, (vii) a set of multipliers, and (viii) a set of registers ($kxd$),

determining a graph matrix concatenating a first graph parameter and a second graph parameter, wherein the first graph parameter and the second graph parameter are computed based on (i) the normalized adjacency matrix, (ii) the embedding of each new item, (iii) weights and (iv) biases; and
estimating latency of the GNN layer based on the graph matrix, the normalized graph from the graph creation layer and an embedding of each new item by using the first phase of the GNN layer and the second phase of the GNN layer, wherein the latency of the GNN layer is estimated based on (i) a number of rows in first matrix ($R1$), (ii) a number of columns in a second matrix ($C2$), (iii) a number of clock cycles required to perform a first logical operation, (iv) a number of clock cycles required to perform a second logical operation at the predefined frequency on the FPGA.

4. The processor implemented method (300) of claim 1, wherein the position embedding layer profile estimator estimates the performance of the position embedding layer by performing the steps of:

feeding the set of alias inputs from the graph creation layer to a memory controller and the output of the GNN layer, and at every iteration in the loop, a position embedding vector is fetched from a position embedding table stored in a block RAM; and
estimating the latency of the position embedding layer by using a total number of (k) iterations, and a latency of the vector addition at the predefined frequency of the FPGA, wherein the vector addition fetches input from the position embedding vector and the output obtained from the GNN layer.

5. The processor implemented method (300) of claim 1, wherein the attention layer profile estimator estimates the performance of the attention layer by performing the steps of:

processing by the attention layer, an output obtained from the position embedding layer (p) with one or more weights, wherein the attention layer comprises of a primary phase and a secondary phase,

wherein, the primary phase of the attention layer includes (i) a first set of parallel multipliers with dimension

($d$), (ii) an adder tree with dimension ($d$), (iii) a sigmoid, (iv) an adder with two paths, and (v) a register, wherein, the secondary phase of the attention layer includes (i) a second set of parallel multipliers with dimension ($2d$) and the set of parallel multipliers with dimension ($d$), (ii) an adder tree with dimension ($2d$) and the adder tree with dimension ($d$), (iii) an adder, (iv) a normalizer, and (v) a set of registers; and

estimating the latency of the attention layer based on latency paths with its corresponding safe margin latency by using the primary phase of the attention layer and the secondary phase of the attention layer.

**6.** The processor implemented method (300) of claim 1, wherein the scoring layer profile estimator estimates the performance of the scoring layer by,

obtaining a set of item embeddings, and an output of the attention layer; and
estimating the latency of the scoring layer based on an iteration latency and the set of item embeddings, wherein the iteration latency is computed based on one or more parallel adders with dimension ($d$) with the adder tree with dimension ($d$).

**7.** The processor implemented method (300) of claim 1, wherein a first option selected by the user for deployment of the optimal layer is determined based on a throughput selected by the user to identify an optimal hardware between the CPUs, the GPUs, and the FPGA, wherein a second option selected by the user for deployment of the optimal layer is determined based on the latency of each layer matched with a service level agreement in real time interference, where the latency of the CPUs and the GPUs are obtained by inversing the throughput, and the latency of the FPGA is obtained by performing logical operation on the estimated latency of each layer in clock cycles with a time period.

**8.** The processor implemented method (300) of claim 1, wherein a third option selected by the user for deployment of the optimal layer is determined based on a budget constraint with high throughput, and identifying one or more hops between the CPUs, the GPUs, and the FPGA, wherein a fourth option selected by the user for deployment of the optimal layer is determined based on the budget constraint with low latency, and identifying one or more hops between the CPUs, the GPUs, and the FPGA.

**9.** A system (100) to estimate performance of session based recommendation (SBR) model layers on FPGA, comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

analyze by using a model analyzer unit, a session based recommendation (SBR) model sectioned into a set of layers comprising a graph creation layer, a graph neural network (GNN) layer, a position embedding layer, an attention layer, and a scoring layer, and recording number of hidden units in each layer with a maximum session length and one or more model parameters comprising of one or more weights and one or more biases;
determine by using a profiling and modelling unit, a network bandwidth required to process each layer of the SBR model based on dimensions of each layer and a corresponding batch size;
estimate a performance of each layer of the SBR model on a field programmable gated array (FPGA) at a predefined frequency by creating a layer profile comprising a throughput and a latency in one or more batches,

wherein, a graph creation profile estimator estimates the performance of the graph creation layer,
wherein, a graph neural network (GNN) profile estimator estimates the performance of the graph neural network (GNN) layer,
wherein, a position embedding layer profile estimator estimates the performance of the position embedding layer,
wherein, an attention layer profile estimator estimates the performance of the attention layer, and
wherein, a scoring layer profile estimator estimates the performance of the scoring layer; and

deploy by using a deployment optimizer an optimal layer on at least one of a one or more central processing units (CPUs), a one or more graphics processing units (GPUs) and the FPGA based on (i) the estimated performance of each layer profile on the FPGA, (ii) an execution time of each layer on the CPUs, and the GPUs, and (iii) a one or more options selected by a user.

10. The system of claim 9, wherein the graph creation profile estimator estimates the performance of the graph creation layer by performing the steps of:

obtain sequentially by a sorting module of the graph creation layer, and a set of original items in a session; remove by a data pre-processing block one or more redundant elements from the set of original items to create a set of new items, and retaining original position of each new item from the set of original items that are lost during a sorting process, and storing on-chip memory, wherein the original position of each new item is a set of alias inputs;

fetch for each new item an embedding of dimension ($d$) by using a prestored embedding table stored in a high bandwidth memory (HBM) of the FPGA;

create adjacency matrix comprising an in-adjacency matrix and an out-adjacency matrix based on a predefined maximized session length and the set of alias inputs to (i) refrain dynamic memory reshaping within the FPGA, and (ii) estimate a latency of the graph creation layer, wherein the adjacency matrix is initiated with an initiation interval for a predefined clock cycle of an pipelined path with a total number of ($k$) inputs, wherein the in-adjacency matrix and the out-adjacency matrix are constructed in parallel, wherein the latency of the graph creation layer is estimated based on (i) a latency of the data pre-processing block, (ii) a maximum item embedding fetching latency from the HBM, and (iii) a normalized adjacency matrix, wherein the latency of the data pre-processing block and the normalized adjacency matrix depends on a number of inputs ($k$) to each pipelined path and a pre-defined latency; and

create a normalized graph by performing normalization of the in-adjacency matrix and the out-adjacency matrix in parallel.

11. The system of claim 9, wherein the graph neural network profile estimator estimates the performance of the graph neural network (GNN) layer by performing the steps of:

processing by the GNN layer, the normalized graph and an embedding of each new item obtained from the graph creation layer, wherein the GNN layer comprises of a first phase and a second phase,

wherein the first phase comprises of (i) a first set of parallel multipliers with dimension ($d$), (ii) a set of adder trees with dimension ($d'$), (iii) a set of adders, (iv) a set of parallel multipliers with dimension ($k$), (v) a set of vector additions ($d$), and (vi) a set of registers (kxd) forming a large register ($kx2d$),

wherein the second phase comprises of a (i) second set of parallel multipliers with dimension ($2d$) and the set of parallel multipliers with dimension ($d$), (ii) a set of adder trees with dimension ($2d$), and the adder tree with dimension ($d$), (iii) a set of adders, (iv) a tanh, (v) a subtractor, (vi) a set of sigmoids, (vii) a set of multipliers, and (viii) a set of registers (kxd),

determining a graph matrix concatenating a first graph parameter and a second graph parameter, wherein the first graph parameter and the second graph parameter are computed based on (i) normalized adjacency matrix, (ii) the embedding of each new item, (iii) weights and (iv) biases; and

estimating latency of the GNN layer based on the graph matrix, the normalized graph from the graph creation layer and an embedding of each new item by using the first phase of the GNN layer and the second phase of the GNN layer.

12. The system of claim 9, wherein the wherein the position embedding layer profile estimator estimates the performance of the position embedding layer by performing the steps of:

feeding the set of alias inputs from the graph creation layer to a memory controller and the output of the GNN layer, and at every iteration in the loop, a position embedding vector is fetched from a position embedding table stored in a block RAM; and

estimating the latency of the position embedding layer by using a total number of ($k$) iterations, and a latency of the vector addition at the predefined frequency of the FPGA, wherein the vector addition fetches input from the position embedding vector and the output obtained from the GNN layer.

13. The system of claim 9, wherein the attention layer profile estimator estimates the performance of the attention layer by performing the steps of:

processing by the attention layer, an output obtained from the position embedding layer ($p$) with one or more weights, wherein the attention layer comprises of a primary phase and a secondary phase,

wherein, the primary phase of the attention layer includes (i) a first set of parallel multipliers with dimension ($d$), (ii) an adder tree with dimension ($d$), (iii) a sigmoid, (iv) an adder with two paths, and (v) a register, wherein, the secondary phase of the attention layer includes (i) a second set of parallel multipliers with dimension ($2d$) and the set of parallel multipliers with dimension ($d$), (ii) an adder tree with dimension ($2d$) and the adder tree with dimension ($d$), (iii) an adder, (iv) a normalizer, and (v) a set of registers; and

estimating the latency of the attention layer based on latency paths with its corresponding safe margin latency by using the primary phase of the attention layer and the secondary phase of the attention layer.

14. The system of claim 9, wherein the scoring layer profile estimator estimates the performance of the scoring layer by,

obtaining a set of item embeddings, and an output of the attention layer; and
estimating the latency of the scoring layer based on an iteration latency and the set of item embeddings, wherein the iteration latency is computed based on one or more parallel adders with dimension ($d$) with the adder tree with dimension ($d$).

15. One or more non-transitory machine-readable information storage mediums comprising one or more instructions which when executed by one or more hardware processors cause:

analyzing, a session based recommendation (SBR) model sectioned into a set of layers comprising a graph creation layer, a graph neural network (GNN) layer, a position embedding layer, an attention layer, and a scoring layer, and recording number of hidden units in each layer with a maximum session length and one or more model parameters comprising of one or more weights and one or more biases;
determining, a network bandwidth required to process each layer of the SBR model based on dimensions of each layer and a corresponding batch size;
estimating, a performance of each layer of the SBR model on a field programmable gated array (FPGA) at a predefined frequency by creating a layer profile comprising a throughput and a latency in one or more batches,

wherein, a graph creation profile estimator estimates the performance of the graph creation layer,
wherein, a graph neural network (GNN) profile estimator estimates the performance of the graph neural network (GNN) layer, wherein, a position embedding layer profile estimator estimates the performance of the position embedding layer,
wherein, an attention layer profile estimator estimates the performance of the attention layer, and
wherein, a scoring layer profile estimator estimates the performance of the scoring layer; and

deploying, an optimal layer on at least one of a one or more central processing units (CPUs), a one or more graphics processing units (GPUs) and the FPGA based on (i) the estimated performance of each layer profile on the FPGA, (ii) an execution time of each layer on the CPUs, and the GPUs, and (iii) a one or more options selected by a user.

**System 100**

Hardware Processor(s) **104**

I/O Interface(s) **106**

Memory **102**

Modules **108**

FIG. 1

Host CPU

FPGA-Alveo U280

item indices ⟹

| XILINX XRT 212 |

PCIe

| PCIe INTER-FACE 214 |

item indices

FPGA CARD

| SCORING 210 |

session embedding

topK_items

| PRE-PROCESSING BLOCK 202 |

alias_in-put

| GRAPH CREATION |

session graph

| GNN 204 |

new item embeddings

| POSITION EMBEDDING 206 |

unique_input

item-embeddings

| ATTENTION LAYER 208 |

| HBM CONTROLLER 216 |

session embedding

session embedding

| HBM MEMORY 218 |

FIG.2A

SBR Model → Model Analyzer — 220

layer_1, layer_2,..., layer_n

Profiling and Modelling Unit — 222

- Network Bandwith Estimation
- Profile individual layers on CPU
- Profile individual layers on GPU
- Model individual layers on FPGA and estimate the latency

Budget   Latency   Throughput

Deployment Optimizer — 224

Most optimal deployment Option

FIG.2B

300

analyze by using a model analyzer unit, a session-based recommendation (SBR) model sectioned into a set of layers comprising a graph creation layer, a graph neural network (GNN) layer, an attention layer, a scoring layer, and a position embedding layer, and recording number of hidden units in each layer with a maximum session length and one or more model parameters comprising of one or more weights and one or more biases

302

determine by using a profiling and modelling unit, a network bandwidth required to process each layer of the SBR model based on dimensions of each layer and a corresponding batch size

304

estimate a performance of each layer of the SBR model on a field programmable gated array (FPGA) at a predefined frequency by creating a layer profile comprising a throughput and a latency

306

deploy by using a deployment optimizer, an optimal layer on at least one of a one or more central processing units (CPUs), a one or more graphics processing units (GPUs) and the FPGA based on (i) the estimated performance of each layer profile on the FPGA, (ii) an execution time of the CPU, GPU, and (iii) a one or more options selected by a user

308

FIG.3

**FIG.4A**

1 item-embedding | 1 item-embedding | 1 item-embedding | 1 item-embedding | 1 item-embedding

| HBM Bank (256 MB) | HBM Bank (256 MB) | HBM Bank (256 MB) | . . . | HBM Bank (256 MB) | HBM Bank (256 MB) |

a) HBM with 32 Banks

1 item-embedding | 1 item-embedding

| DDR Bank (16 GB) | DDR Bank (16 GB) |

b) DDR DRAM with 2 Banks

**FIG.4B**

**FIG.5A**

FIG.5B

FIG. 6

FIG. 7A

**FIG. 7B**

**FIG. 8**

EP 4 261 748 A1

Europäisches
Patentamt

European
Patent Office

Office européen
des brevets

# EUROPEAN SEARCH REPORT

**Application Number**

EP 23 15 0547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRISHNAN ASHWIN ET AL: "Performance Model and Profile Guided Design of a High-Performance Session Based Recommendation Engine", PROCEEDINGS OF THE 1ST INTERNATIONAL WORKSHOP ON EXTREME HETEROGENEITY SOLUTIONS, ACMPUB27, NEW YORK, NY, USA, 9 April 2022 (2022-04-09), pages 133-144, XP058987654, DOI: 10.1145/3489525.3511692 ISBN: 978-1-4503-9431-4 * page 133 - page 144, left-hand column, paragraph 2 * | 1-15 | INV. G06N3/063 ADD. G06N3/04 |
| A | JIANG WENQI ET AL: "FleetRec: Large-Scale Recommendation Inference on Hybrid GPU-FPGA Clusters", ADVANCES IN ARTIFICIAL INTELLIGENCE, ACM, 2 PENN PLAZA, SUITE 701NEW YORKNY10121-0701USA, 14 August 2021 (2021-08-14), pages 3097-3105, XP059154248, DOI: 10.1145/3447548.3467139 ISBN: 978-1-4503-6583-3 * the whole document * | 1-15 | |
| A | GUPTA UDIT ET AL: "RecPipe: Co-designing Models and Hardware to Jointly Optimize Recommendation Quality and Performance", PROCEEDINGS OF THE 1ST WORKSHOP ON DIGITAL TWIN & EDGE AI FOR INDUSTRIAL IOT, ACMPUB27, NEW YORK, NY, USA, 18 October 2021 (2021-10-18), pages 870-884, XP058992410, DOI: 10.1145/3466752.3480127 ISBN: 978-1-4503-9970-8 * the whole document *  -/-- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 28 August 2023 | Volkmer, Markus |

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 15 0547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/210836 A1 (KIM KYOUNG YOUNG [KR] ET AL) 2 July 2020 (2020-07-02) * the whole document * ----- | 1-15 | |
| X,P | MAHAJAN CHINMAY ET AL: "Hetero-Rec: Optimal Deployment of Embeddings for High-Speed Recommendations", PROCEEDINGS OF THE 2ND INTERNATIONAL CONFERENCE ON AI-ML SYSTEMS (AIMLSYSTEMS'22), 12 October 2022 (2022-10-12), pages 1-9, XP093076049, DOI: 10.1145/3564121.3564134 ISBN: 978-1-4503-9847-3 * the whole document * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 28 August 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 0547

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2023

| Patent document cited in search report | | Publication date | Patent family member(s) | Publication date |
|---|---|---|---|---|
| US 2020210836 | A1 | 02-07-2020 | CN 111401545 A | 10-07-2020 |
| | | | DE 102019124404 A1 | 02-07-2020 |
| | | | KR 20200084099 A | 10-07-2020 |
| | | | US 2020210836 A1 | 02-07-2020 |

EPO FORM P0459

**REFERENCES CITED IN THE DESCRIPTION**

**Patent documents cited in the description**

- WO 202221021632 A